(19) **Europäisches Patentamt / European Patent Office / Office européen des brevets**

(11) **EP 3 405 656 B1**

(12) **FASCICULE DE BREVET EUROPEEN**

(45) Date de publication et mention
de la délivrance du brevet:
**25.12.2019 Bulletin 2019/52**

(21) Numéro de dépôt: **17702678.8**

(22) Date de dépôt: **10.01.2017**

(51) Int Cl.:
*F01D 25/04* (2006.01)     *F02K 3/06* (2006.01)
*F02C 7/047* (2006.01)     *F02C 9/18* (2006.01)
*F01D 25/02* (2006.01)     *F01D 25/24* (2006.01)

(86) Numéro de dépôt international:
**PCT/FR2017/050048**

(87) Numéro de publication internationale:
**WO 2017/125663 (27.07.2017 Gazette 2017/30)**

(54) **MODULE DE SOUFFLANTE DE TURBOMACHINE AERONAUTIQUE AVEC UN DISPOSITIF DE DEGIVRAGE D'UN BEC DE SEPARATION ET D'AUBES DIRECTRICES D'ENTREE**

BLÄSERMODUL EINES LUFTFAHRZEUG-TURBINENTRIEBS MIT EINER VORRICHTUNG ZUM ENTEISEN EINES SPLITTERS UND EINTRITTSLEITSCHAUFELN

AIRCRAFT TURBOMACHINE FAN MODULE WITH A DEVICE FOR DE-ICING A SPLITTER NOSE AND INLET GUIDE VANES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2016 FR 1650510**

(43) Date de publication de la demande:
**28.11.2018 Bulletin 2018/48**

(73) Titulaire: **Safran Aircraft Engines**
**75015 Paris (FR)**

(72) Inventeurs:
• **SCHOLTES, Christophe**
**77550 Moissy-Cramayel (FR)**
• **BRUNET, Antoine**
**77550 Moissy-Cramaye (FR)**
• **AMOEDO, Simon**
**77550 Moissy-Cramaye (FR)**

(74) Mandataire: **Cabinet Beau de Loménie**
**158, rue de l'Université**
**75340 Paris Cedex 07 (FR)**

(56) Documents cités:
**WO-A1-2014/182289     FR-A1- 3 004 485**
**US-A1- 2003 035 719**

## Description

### Arrière-plan de l'invention

La présente invention se rapporte au domaine général des turbomachines. L'invention concerne plus particulièrement un système de dégivrage d'un bec de séparation et d'aubes d'entrée fixes de la veine primaire de la turbomachine.

Dans une turbomachine aéronautique du type à double corps et double flux, les veines d'écoulement du flux primaire et du flux secondaire sont séparées en aval de la soufflante par un bec de séparation. Au sein de la veine primaire, à l'entrée du compresseur basse pression (aussi couramment appelé « booster »), se trouvent un ensemble d'aubes directrices d'entrée fixes (aussi appelées IGV pour « Inlet Guide Vane »).

Dans certaines phases de vol et au sol, des conditions atmosphériques givrantes peuvent être rencontrées par la turbomachine, notamment lorsque la température ambiante est suffisamment basse et en présence d'une humidité élevée. Dans ces conditions, de la glace peut se former sur le bec de séparation et les aubes directrices d'entrée. Lorsque ce phénomène se produit, il peut conduire à l'obstruction partielle ou totale de la veine primaire, et à l'ingestion de blocs de glace détachés dans la veine primaire. Une obstruction de la veine primaire entraîne une sous-alimentation de la chambre de combustion qui peut alors s'éteindre ou empêcher l'accélération du moteur. Dans le cas du détachement de blocs de glace, ces derniers peuvent endommager le compresseur situé à l'aval et conduire également à l'extinction de la chambre de combustion.

Pour éviter la formation de glace sur le bec de séparation, on connait des techniques consistant à venir prélever de l'air chaud dans la veine primaire au niveau d'un compresseur et à l'injecter à l'intérieur du bec de séparation. L'air chaud injecté dans le bec de séparation peut ensuite cheminer le long d'une paroi interne du bec jusqu'à des perçages ou de rainures configurées pour injecter l'air chaud dans la veine primaire vers les aubes à dégivrer. L'utilisation de perçages dans la virole interne portant les aubes directrices permet de former des jets d'air chaud qui peuvent dégivrer en partie les aubes d'entrée. Cependant, les perçages ou rainures de ces dispositifs ne peuvent pas être positionnés suffisamment en amont des aubes directrices d'entrée, ce qui laisse peu d'espace aux jets pour pénétrer en profondeur dans la veine primaire et dégivrer les aubes sur une hauteur satisfaisante. Les documents US 2003/0035719 A1, WO 2014/182289 A1 et FR 3004485 divulguent des modules de soufflante de turbomachine aéronautique avec dispositif de dégivrage d'un bec de séparation.

Enfin, le débit d'air chaud nécessaire pour dégivrer le bec de séparation et pour que les jets d'air chaud de dégivrage des aubes puissent lutter contre le flux d'air froid entrant dans la veine primaire est important. Ce prélèvement d'air chaud peut réduire les performances et l'opérabilité de la turbomachine. Il serait donc souhaitable de pouvoir augmenter l'efficacité du dégivrage du bec et des aubes directrices d'entrée simultanément sans augmenter pour autant le prélèvement d'air chaud dans le compresseur.

### Objet et résumé de l'invention

La présente invention a donc pour but principal de proposer un dispositif de dégivrage d'un bec de séparation et d'aubes directrices d'entrée qui permette un dégivrage amélioré du bec de séparation et des aubes directrices d'entrée de la veine primaire.

Ce but est atteint avec un dispositif de dégivrage d'un bec de séparation et d'aubes directrices d'entrée de turbomachine aéronautique, comprenant :

un bec de séparation destiné à être positionné à l'aval d'une soufflante de la turbomachine pour former une séparation entre des canaux annulaires d'écoulement d'un flux primaire et d'un flux secondaire issus de la soufflante, ledit bec comportant une paroi annulaire extérieure délimitant l'intérieur du canal d'écoulement du flux secondaire et une paroi annulaire intérieure délimitant une entrée du canal d'écoulement du flux primaire, ladite paroi annulaire intérieure étant munie d'orifices d'injection positionnés en amont des aubes directrices d'entrée et par lesquels est destiné à être soufflé de l'air chaud, et une virole interne sur laquelle sont fixées des aubes directrices d'entrée et comprenant un crochet, ladite virole interne étant bloquée axialement à l'amont sur la paroi annulaire intérieure par ledit crochet.

Conformément à l'invention, le crochet comprend une surface extérieure en regard de la paroi annulaire extérieure formant un angle inférieur à 90° avec l'axe d'un orifice d'injection de sorte que la surface extérieure du crochet se rapproche progressivement de la paroi annulaire extérieure en s'éloignant dudit orifice d'injection, la surface extérieure du crochet présentant un jeu minimal J avec la paroi annulaire extérieure tel que : $0,2 \leq J/D \leq 0,6$ ; où D est le diamètre hydraulique de l'orifice d'injection.

Dans le présent exposé, les termes « amont » et « aval » sont définis par rapport à la direction d'écoulement de l'air à l'intérieur de la turbomachine ; les termes « intérieur » et « extérieur », « axial » et « radial », et leurs dérivés, sont définis par rapport à l'axe longitudinal de la turbomachine.

Le dispositif selon l'invention permet d'assurer simultanément et avec un même flux d'air chaud, le dégivrage du bec de séparation et des aubes directrices d'entrée.

L'angle inférieur à 90° entre la surface extérieure du crochet et l'axe d'un orifice d'injection, et l'orientation de ladite surface permet l'existence d'un jeu minimal entre le crochet et la paroi annulaire extérieure du bec de séparation. Ce jeu minimal permet d'accélérer le flux d'air chaud qui arrive à l'intérieur du bec de séparation vers l'amont. Cette accélération du flux d'air chaud à l'intérieur du bec augmente la vitesse d'impact du flux d'air chaud sur l'extrémité du bec de séparation, ce qui améliore son dégivrage. De plus, la forme du crochet selon l'invention permet une meilleure répartition du flux d'air chaud en azimut, c'est-à-dire le long du bec de séparation et autour de l'axe longitudinal de la turbomachine. A l'inverse, avec les dispositifs de l'art antérieur, l'écoulement de l'air chaud est généralement concentré autour des perçages ce qui entraine un dégivrage inhomogène du bec de séparation.

L'inégalité présentée ci-dessus pour le jeu minimal J et le diamètre des orifices d'injection D permet d'assurer correctement le dégivrage du bec dans toutes les conditions de fonctionnement de la turbomachine.

Dans le dispositif selon l'invention, les perçages peuvent être séparés et éloignés du crochet et peuvent être ainsi positionnés plus en amont des aubes directrices d'entrée que dans les dispositifs de l'art antérieur. Ainsi, les jets d'air chaud disposent de plus de distance pour pénétrer dans la veine et dégivrer les aubes directrices d'entrée sur une profondeur plus importante dans la veine.

De manière générale, le dispositif selon l'invention permet, pour un même débit d'air chaud prélevé dans le moteur, d'obtenir un meilleur dégivrage du bec de séparation et une meilleure pénétration des jets d'air chaud dans la veine qu'avec les dispositifs de l'art antérieur. En effet, les études ont notamment montré une augmentation de la pénétration des jets dans la veine jusqu'à 50% de plus qu'avec les dispositifs de l'art antérieur basés sur des jets d'air chaud.

Le crochet est axisymétrique autour d'un axe longitudinal de la turbomachine.

De préférence, la surface extérieure du crochet forme un angle compris entre 40° et 70° avec l'axe d'un orifice d'injection. Lorsque le crochet est réalisé de la sorte, l'angle avec lequel chaque jet d'air chaud pénètre dans la veine primaire est tel que le jet est plus incliné vers l'amont qu'avec un angle hors de cette plage de valeurs. Cette disposition augmente encore la pénétration du jet d'air chaud dans la veine et améliore le dégivrage des aubes directrices d'entrée.

De préférence également, le diamètre hydraulique $\underline{D}$ d'un orifice d'injection respecte l'inégalité suivante : $2\% \leq D/H \leq 6\%$, où H est la distance entre l'orifice d'injection et une paroi intérieure du canal d'écoulement du flux primaire. La distance $\underline{H}$ correspond également à la hauteur de la veine d'écoulement du flux primaire au niveau des orifices d'injection. Cette plage de valeurs permet de s'assurer que le jet d'air chaud dans la veine est adapté aux dimensions du compresseur. En effet, pour des valeurs de D/H < 2%, le débit d'air chaud sortant de l'orifice est trop faible pour assurer un dégivrage correct. Pour des valeurs de D/H > 6%, la section d'un orifice est plus grande et le jet généré est caractérisé par un faible nombre de Mach, ce qui entraine un cisaillement rapide du jet par l'écoulement du flux primaire dans la veine.

Selon un mode de réalisation, chaque orifice d'injection peut présenter une section circulaire.

Le dispositif peut comprendre en outre des moyens d'acheminement d'air chaud configurés pour délivrer de l'air chaud vers l'amont à l'intérieur du bec de séparation.

L'invention vise aussi un module de soufflante de turbomachine aéronautique comprenant : une soufflante, un compresseur basse pression, des aubes directrices d'entrée situées à l'amont du compresseur basse pression et à l'aval de la soufflante, et un dispositif de dégivrage tel que celui présenté précédemment, les orifices d'injection étant positionnés sur la paroi annulaire intérieure du bec de séparation de sorte qu'en fonctionnement, l'air chaud délivré par chaque orifice d'injection dans le canal d'écoulement du flux primaire soit éjecté vers un bord d'attaque d'une aube directrice d'entrée.

Enfin, l'invention vise encore une turbomachine aéronautique comprenant un module de soufflante tel que celui présenté ci-dessus.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une vue partielle en coupe longitudinale d'une turbomachine aéronautique équipée d'un dispositif de dégivrage conforme à l'invention,
- la figure 2 est une vue agrandie de la turbomachine de la figure 1 au niveau du bec de séparation, et
- la figure 3 est une vue agrandie de la figure 2 au niveau du crochet de la virole interne.

Description détaillée de l'invention

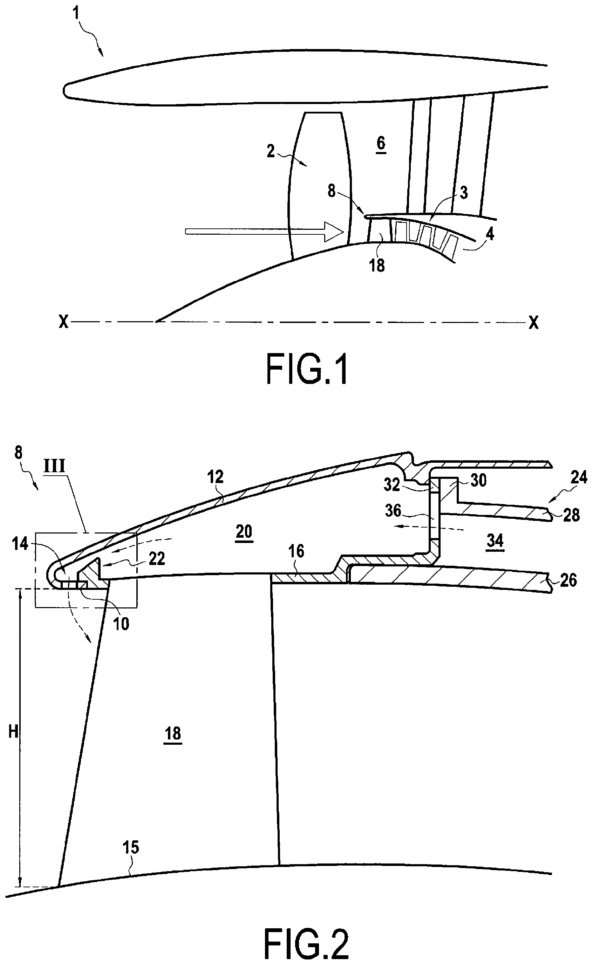

La figure 1 représente partiellement une turbomachine aéronautique 1 du type à double corps et double flux à laquelle peut s'appliquer l'invention.

De façon connue en soi, la turbomachine 1 est axisymétrique par rapport à un axe longitudinal X-X et comprend une entrée à son extrémité amont qui reçoit de l'air extérieur, cet air venant alimenter une soufflante 2. En aval de la soufflante 2, l'air se répartit entre une veine (ou canal) d'écoulement d'un flux primaire 4 (ou flux chaud) et une veine d'écoulement d'un flux secondaire 6 (ou flux froid). Ces deux veines 4, 6 sont séparées l'une de l'autre à leur entrée par un bec de séparation 8. Une fois entré dans la veine d'écoulement du flux primaire 4, l'air traverse ensuite un compresseur basse pression 3 (ou « booster »), un compresseur haute pression, une chambre de combustion et des turbines (ces derniers éléments ne sont pas représentés sur les figures), avant d'être éjecté à l'extérieur de la turbomachine.

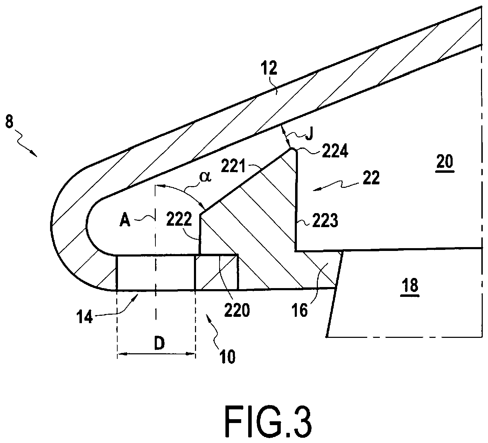

Comme représenté sur les figures 2 et 3, le bec de séparation 8 a une section longitudinale en forme de U ou V arrondi à son extrémité amont, et comprend une paroi annulaire intérieure 10 délimitant l'entrée de la veine d'écoulement du flux primaire 4, et une paroi annulaire extérieure 12 délimitant à l'intérieur la veine d'écoulement du flux secondaire 6. La paroi annulaire extérieure 12 présente une dimension dans la direction longitudinale plus importante que celle de la paroi annulaire intérieure 10.

La paroi annulaire intérieure 12 du bec de séparation 8 comprend des perçages formant des orifices d'injection d'air chaud 14 dans la veine d'écoulement du flux primaire 4 ayant un axe de perçage A. Les orifices d'injection 14 sont répartis circonférentiellement autour de la paroi annulaire intérieure 10. L'axe A de chaque orifice 14 est ici sensiblement radial par rapport à l'axe X-X de la turbomachine, c'est-à-dire que l'axe A est sensiblement perpendiculaire à l'axe X-X. Comme cela est visible sur la figure 2, les orifices d'injection 14 sont séparés d'une distance H de la paroi 15 délimitant la veine d'écoulement du flux primaire à l'intérieur (la distance H correspond aussi à la hauteur de veine au droit des orifices d'injection 14). Les orifices d'injection 14 peuvent être circulaires, comme dans l'exemple illustré, ou par exemple ovales. Dans tous les cas, ils peuvent présenter un diamètre hydraulique D respectant l'inégalité $0,02 \leq D/H \leq 0,06$. Le diamètre hydraulique est, de façon connue en soi, défini pour de l'air comme le rapport entre quatre fois l'aire de la section de passage d'un orifice et le périmètre de cet orifice. Dans le cas d'un orifice d'injection 14 de section circulaire, le diamètre hydraulique est égal au diamètre de l'orifice.

La paroi annulaire intérieure 10 du bec de séparation 8 est prolongée à l'aval par une virole interne 16. La virole interne 16 porte les aubes directrices d'entrée 18 fixes de la turbomachine. On notera que la position des orifices d'injection 14 peut être choisie pour qu'en fonctionnement, les jets d'air chaud délivrés par lesdits orifices 14 impactent le bord d'attaque des aubes directrices d'entrée 18 dans la veine d'écoulement du flux primaire. Les parois annulaires intérieure 10 et extérieure 12, et la virole interne 16, définissent une cavité annulaire 20 à l'intérieur du bec de séparation 8. La virole interne 16 est montée et bloquée à l'amont sur la paroi annulaire interne 10 du bec de séparation 8 par un crochet 22 intégré à ladite virole 16, et à l'aval sur un carter structural 24 de la turbomachine.

Dans l'exemple illustré, le carter structural 24 comprend un carter interne 26 prolongeant la virole interne 16 à l'aval, et sur lequel la virole interne 16 vient s'appuyer ; et un carter externe 28 muni d'une bride 30 destinée à coopérer avec une bride 32 présente à l'extrémité aval de la virole interne 16. Les carters interne 26 et externe 28 délimitent entre eux un canal annulaire d'acheminement d'air chaud 34 débouchant dans la cavité 20 du bec de séparation 8 par l'intermédiaire d'ouvertures 36 présentes dans la bride 32 de la virole interne 16. Des injecteurs d'air chaud (non représentés) permettent d'introduire de l'air chaud prélevé par exemple dans un compresseur de la turbomachine à l'intérieur du canal annulaire d'acheminement d'air chaud 34.

Le crochet 22 à l'amont de la virole interne 16 est représenté plus en détails sur la figure 3. Le crochet 22 comprend une surface intérieure 220 reposant sur la paroi annulaire intérieure 10 du bec de séparation 8, et une surface extérieure 221 en regard de la paroi annulaire extérieure 12 du bec 8. Le crochet 22 comprend en outre une surface amont 222 et une surface aval 223 qui sont ici sensiblement parallèles entre elles, et qui s'étendent ici selon une direction sensiblement radiale. La surface amont 222 du crochet 22 assure la liaison entre la surface intérieure 220 et la surface extérieure 221 à l'amont. La surface amont 222 est ici plus petite que la surface aval 223. En coupe longitudinale les surfaces 220, 221, 222 et 223 du crochet 22 sont ici sensiblement droites.

Le crochet 22 est de préférence axisymétrique autour de l'axe X-X, et positionné en aval des orifices d'injection 14 sans les obstruer, c'est-à-dire que le crochet 22 n'est pas situé radialement au-dessus des orifices 14. Le crochet 22 est décalé des orifices d'injection 14 de sorte que la surface amont 222 correspondant à l'extrémité amont du crochet soit située en aval des orifices d'injection 14.

Conformément à l'invention, la surface extérieure 221 du crochet 22 en regard de la paroi annulaire extérieure 12 du bec de séparation 8 forme un angle $\alpha$ inférieur à 90° avec l'axe A d'un orifice d'injection (figure 3). L'angle $\alpha$ peut être compris entre 40° et 70° afin d'améliorer la pénétration du jet d'air chaud dans la veine d'écoulement du flux primaire. Ainsi, la surface extérieure 221 du crochet 22 est inclinée et se rapproche progressivement de la paroi annulaire extérieure 12 du bec 8 lorsque l'on se déplace d'amont en aval sur la surface extérieure 221, c'est-à-dire en s'éloignant de l'orifice d'injection 14. L'inclinaison de la surface extérieure 221 permet également de définir un jeu variable entre cette surface 221 et la paroi annulaire extérieure 12 ayant une valeur minimale J. Dans l'exemple illustré, le jeu minimal J est la distance prise entre un point situé sur l'arête circulaire 224 entre les surfaces 221 et 223, et la paroi annulaire extérieure 12. Selon l'invention, le jeu minimal J et le diamètre hydraulique D des orifices d'injection vérifient l'inégalité : $0,2 \leq J/D \leq 0,6$.

En fonctionnement, de l'air chaud est acheminé, par exemple grâce au canal 34, jusque dans la cavité 20 à l'intérieur du bec de séparation. Les sorties possibles pour ce flux d'air chaud (le flux d'air étant symbolisé par des flèches en pointillés sur la figure 2) sont constituées par les orifices d'injection 14. Le flux d'air chaud se dirige ainsi vers l'amont du bec de séparation 8 en direction du crochet 22. Lorsque le flux d'air approche le crochet 22 il est dévié vers l'extérieur par la surface aval 223 du crochet 22. Il doit ensuite cheminer au-dessus du crochet par le rétrécissement où le jeu J est minimal entre la surface extérieure 221 du crochet 22 et la paroi annulaire extérieure 12 du bec 8. En passant au niveau du rétrécissement, le flux d'air chaud s'accélère pour venir impacter l'extrémité du bec de séparation 8 et la réchauffer. Enfin, le flux d'air peut longer la paroi du bec 8 au niveau de son extrémité amont et atteindre les orifices d'injection 14 qui vont le projeter dans la veine sous la forme de jets d'air chaud. Les jets d'air chaud ainsi générés peuvent impacter les aubes directrices d'entrée au niveau de leur bord d'attaque pour les dégivrer.

Les études réalisées ont montré une bonne répartition du flux d'air chaud en direction azimutale le long du bec de séparation, mais aussi une uniformité de la profondeur de pénétration des jets créés par les orifices d'injection dans la veine. Le dispositif selon l'invention permet ainsi d'assurer plus efficacement les deux fonctions de dégivrage du bec de séparation 8 et des aubes directrices d'entrée 18, sans nécessiter d'augmenter le prélèvement d'air chaud dans le compresseur par rapport aux dispositifs de l'art antérieur.

## Revendications

1. Module de soufflante de turbomachine aéronautique (1) comprenant : une soufflante (2), un compresseur basse pression (3), des aubes directrices d'entrée (18) situées à l'amont du compresseur basse pression et à l'aval de la soufflante (2), et un dispositif de dégivrage d'un bec de séparation (8) et d'aubes directrices d'entrée (18) de la turbomachine, ledit dispositif de dégivrage comprenant :

   un bec de séparation (8) destiné à être positionné à l'aval de la soufflante (2) de la turbomachine pour former une séparation entre des canaux annulaires d'écoulement d'un flux primaire (4) et d'un flux secondaire (6) issus de la soufflante, ledit bec comportant une paroi annulaire extérieure (12) délimitant l'intérieur du canal d'écoulement du flux secondaire (6) et une paroi annulaire intérieure (10) délimitant une entrée du canal d'écoulement du flux primaire (4), ladite paroi annulaire intérieure (10) étant munie d'orifices d'injection (14) positionnés en amont des aubes directrices d'entrée et par lesquels est destiné à être soufflé de l'air chaud, et
   une virole interne (16) sur laquelle sont fixées des aubes directrices d'entrée (18) et comprenant un crochet (22) axisymétrique autour d'un axe longitudinal (X-X) de la turbomachine, ladite virole interne (16) étant bloquée axialement à l'amont sur la paroi annulaire intérieure (10) par ledit crochet (22),
   **caractérisé en ce que** le crochet (22) comprend une surface extérieure (221) en regard de la paroi annulaire extérieure (12) formant un angle (α) inférieur à 90° avec l'axe (A) d'un orifice d'injection (14) de sorte que la surface extérieure (221) du crochet (22) se rapproche progressivement de la paroi annulaire extérieure (12) en s'éloignant dudit orifice d'injection (14), la surface extérieure (221) du crochet (22) présentant un jeu minimal J avec la paroi annulaire extérieure (12) tel que :

$$0{,}2 \leq J/D \leq 0{,}6$$

où D est le diamètre hydraulique de l'orifice d'injection (14).

2. Module de soufflante selon la revendication 1, dans lequel la surface extérieure (221) du crochet (22) forme un angle (α) compris entre 40° et 70° avec l'axe (A) d'un orifice d'injection (14).

3. Module de soufflante selon l'une quelconque des revendications 1 et 2, dans lequel le diamètre hydraulique D d'un orifice d'injection (14) respecte l'inégalité suivante : 2% ≤ D/H ≤ 6%, où H est la distance entre l'orifice d'injection (14) et une paroi intérieure (15) du canal d'écoulement du flux primaire (4).

4. Module de soufflante selon l'une quelconque des revendications 1 à 3, dans lequel chaque orifice d'injection (14) présente une section circulaire.

5. Module de soufflante selon l'une quelconque des revendications 1 à 4, comprenant en outre des moyens d'acheminement d'air chaud (34, 36) configurés pour délivrer de l'air chaud vers l'amont à l'intérieur du bec de séparation (8).

6. Turbomachine aéronautique (1) comprenant un module de soufflante selon l'une quelconque des revendications 1 à 5.

## Patentansprüche

1. Gebläsemodul (1) einer Luftfahrtturbomaschine, umfassend: ein Gebläse (2), einen Niederdruckkompressor (3), Eintrittsleitschaufeln (18), die stromaufwärts des Niederdruckkompressors und stromabwärts des Gebläses (2) angeordnet sind, sowie eine Vorrichtung zum Enteisen eines Trennschnabels (8) und von Eintrittsleitschaufeln (18) der Turbomaschine, wobei die Enteisungsvorrichtung umfasst:

   einen Trennschnabel (8), der dazu bestimmt ist, stromabwärts des Gebläses (2) der Turbomaschine positioniert zu werden, um eine Trennung zwischen ringförmigen Strömungskanälen eines Primärstroms (4) und eines Sekundärstroms (6), die aus dem Gebläse kommen, zu bilden, wobei der Schnabel eine äußere ringförmige Wand (12), die den Innenraum des Strömungskanals des Sekundärstroms (6) begrenzt, und eine innere ringförmige Wand (10), die einen Eingang des Strömungskanals des Primärstroms (4) begrenzt, aufweist, wobei die innere ringförmige Wand (10) mit Einspritzöffnungen (14) versehen ist, die stromaufwärts der Eintrittsleitschaufeln angeordnet sind und durch die heiße Luft geblasen werden soll, und einen Innenring (16), an dem Eintrittsleitschaufeln (18) befestigt sind und der einen Haken (22) aufweist, welcher um eine Längsachse (X-X) der Turbomaschine achsensymmetrisch ist, wobei der Innenring (16) stromaufwärts an der inneren ringförmigen Wand (10) durch den Haken (22) axial festgelegt ist,

**dadurch gekennzeichnet, dass** der Haken (22) eine der äußeren ringförmigen Wand (12) gegenüberliegende Außenfläche (221) aufweist, die einen Winkel ($\alpha$) von weniger als 90° mit der Achse (A) einer Einspritzöffnung (14) bildet, so dass sich die Außenfläche (221) des Hakens (22) unter Entfernen von der Einspritzöffnung (14) schrittweise der äußeren ringförmigen Wand (12) nähert, wobei die Außenfläche (221) des Hakens (22) mit der äußeren ringförmigen Wand (12) ein minimales Spiel J aufweist, derart, dass:

$$0{,}2 \leq J/D \leq 0{,}6$$

worin D der hydraulische Durchmesser der Einspritzöffnung (14) ist.

2. Gebläsemodul nach Anspruch 1, bei dem die Außenfläche (221) des Hakens (22) einen Winkel ($\alpha$) zwischen 40° und 70° mit der Achse (A) einer Einspritzöffnung (14) bildet.

3. Gebläsemodul nach einem der Ansprüche 1 und 2, bei dem der hydraulische Durchmesser D einer Einspritzöffnung (14) die folgende Ungleichung berücksichtigt: 2 % $\leq$ D/H $\leq$ 6 %, worin H der Abstand zwischen der Einspritzöffnung (14) und einer Innenwand (15) des Strömungskanals des Primärstroms (4) ist.

4. Gebläsemodul nach einem der Ansprüche 1 bis 3, bei dem jede Einspritzöffnung (14) einen kreisförmigen Querschnitt aufweist.

5. Gebläsemodul nach einem der Ansprüche 1 bis 4, das ferner Mittel zur Beförderung von heißer Luft (34, 36) umfasst, die dazu ausgelegt sind, heiße Luft innerhalb des Trennschnabels (8) stromaufwärts zu liefern.

6. Luftfahrtturbomaschine (1), die ein Gebläsemodul nach einem der Ansprüche 1 bis 5 umfasst.

**Claims**

1. An aviation turbine engine fan module (1) comprising:
a fan (2), a low-pressure compressor (3), inlet guide vanes (18) situated upstream from the low-pressure compressor and downstream from the fan (2), and a deicer device for deicing both a splitter nose (8) and also inlet guide vanes (18) of the turbine engine, said deicer device comprising:

• a splitter nose (8) for positioning downstream from the fan (2) of the turbine engine in order to split a stream coming from the fan into primary and secondary stream flow channels (4, 6) of annular shape, said nose having an outer annular wall (12) defining the inside of the secondary stream flow channel (6) and an inner annular wall (10) defining an inlet of the primary stream flow channel (4), said inner annular wall (10) being provided with injection orifices (14) positioned upstream from the inlet guide vanes and through which hot air is to be blown; and
• an inner shroud (16) to which the inlet guide vanes (18) are fastened and including a hook (22) that is axisymmetric about a longitudinal axis (X-X) of the turbine engine, said inner shroud (16) being held axially at its upstream end against the inner annular wall (10) by said hook (22);

the module being **characterized in that** the hook (22) has an outer surface (221) facing the outer annular wall (12) and forming an angle ($\alpha$) of less than 90° with the axis (A) of an injection orifice (14) such that the outer surface (221) of the hook (22) comes progressively closer to the outer annular wall (12) on going away from said injection orifice (14), the outer surface (221) of the hook (22) presenting a minimum amount of clearance J relative to the outer annular wall (12) such that:

$$0.2 \leq J/D \leq 0.6$$

where D is the hydraulic diameter of the injection orifice (14).

2. A fan module according to claim 1, wherein the outer surface (221) of the hook (22) forms an angle ($\alpha$) lying in the range 40° to 70° with the axis (A) of an injection orifice (14).

3. A fan module according to claim 1 or claim 2, wherein the hydraulic diameter D of an injection orifice (14) satisfies the following inequality: $2\% \leq D/H \leq 6\%$, where H is the distance between the injection orifice (14) and an inner wall (15) of the primary stream flow channel (4) .

4. A fan module according to any one of claims 1 to 3, wherein each injection orifice (14) presents a section that is circular.

5. A fan module according to any one of claims 1 to 4, further comprising means (34, 36) for conveying hot air that are configured to deliver hot air upstream to the inside of the splitter nose (8).

6. An aviation turbine engine (1) including a fan module according to any one of claims 1 to 5.

FIG.1

FIG.2

FIG.3

**EP 3 405 656 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030035719 A1
- WO 2014182289 A1
- FR 3004485